# EUROPEAN PATENT APPLICATION

(11) **EP 4 135 132 A1**
(43) Date of publication of application: **15.02.2023**
(21) Application number: 22189464.5
(22) Date of filing: 09.08.2022
(51) Int. Cl.: H01R 43/28, H01R 43/02, B23K 20/10, H01R 4/18, H01R 43/048

(54) **METHOD FOR CRIMPING A CONTACT ONTO A CABLE, WITH A PORTION OF THE CABLE BEING COMPACTED PRIOR TO AND ASSEMBLY COMPRISING SAID CONTACT CRIMPED ON SAID COMPACTED CABLE**

(30) Priority: 09.08.2021 FR 2108600
(71) Applicant: Aptiv Technologies Limited, 14004 St. Michael (BB)
(72) Inventor: MENEZ, Frédéric, 78125 HERMERAY (FR); ELMANFALOUTI, Abdelaaziz, 78990 ELANCOURT (FR)
(74) Representative: INNOV-GROUP

(57) **Abstract**

Method for crimping a power contact (1) onto a free end of an electric cable (100), comprising, prior to a crimping step, a precompacting step during which at least a stripped part of the cable (100) is compacted.

Assembly obtained using this method

## Description

### Technical field

The invention relates to the field of automobile connections and more particularly to the field of power connections for automotive vehicles.

### Prior art

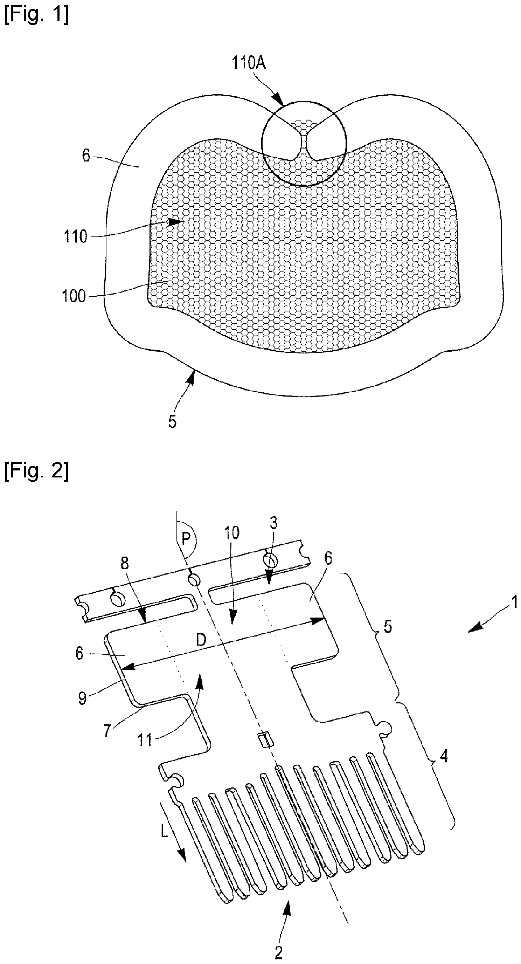

In the field of automotive vehicles and notably of electric, hybrid or rechargeable hybrid vehicles, strong currents may be transmitted in the wiring networks and/or the power electrical circuits (these electrical circuits being fully integrated into the vehicle itself or else comprising at least a part designed to be connected to the vehicle). Such circuits for example interconnect with one another elements such as a charging terminal, battery elements, a motor, a voltage converter, etc. When it is necessary to integrate connectors into the wiring networks intended to transmit strong currents, these connectors need to be fitted with terminals or contacts which are connected to cables of a cross section sufficiently great for transmitting these strong currents without excessive heating. The power terminals and contacts may for example be cut out and shaped from relatively thick sheet metal made of copper (or a copper alloy) or even other metals or alloys. In such cases, the contacts or the terminals are manufactured using particular tooling. If the cross section of the cable increases without the crimping portion of the contact or of the terminal being modified, the crimping ears are no longer suitable and may fail to close up completely around the cable. This is illustrated in Figure 1 where it may be seen, for example, that crimping ears 6 designed for crimping onto a cable 100 of given cross section allow a few strands 110A of a multistrand cable of cross section greater than that intended for this range of contacts 1 to escape from the crimping portion 5 of a contact 1.

One solution consists in creating contacts or terminals with longer crimping ears. Indeed it is possible to create various ranges of contacts, each one respectively corresponding to a given length of crimping ears, each of these lengths being suited to a cross section of cable. Nevertheless, the spacing between each of the contacts along a drive belt is at least partially determined by the length of the crimping ears and is limited in terms of size for a given piece of tooling. For example, the spacing along the drive belt is 41 mm for a developed length of 38.5 mm (which corresponds to contacts having crimping ears suitable for cables with a cross section of 50 square millimetres). However, the spacing needs to be at least 44.5 mm for a developed length of 42 mm (which corresponds to contacts having crimping ears suitable for cables with a cross section of 70 square millimetres). Therefore if the length of the crimping ears is modified, the spacing changes and the cutting and crimping tools need also to be modified.

Thus, having to increase the cross section of the cables in order to be able to use a higher amperage (for example in order to charge the batteries more quickly) entails modifying or changing the tooling.

What is proposed below is a contribution to improving the crimping of a power contact onto a cable.

### Summary of the invention

The proposal is to act on that portion of the cable that is intended to be inserted into the crimping portion of male or female contacts.

More specifically, what is described hereinbelow is a method for crimping a power contact onto a free end of an electric cable. This power contact is of the type comprising a crimping portion extending essentially parallel to a longitudinal direction, the crimping portion comprising a channel on each side of which there extends at least one crimping ear. The channel and the crimping ears form a U-shape in cross section perpendicular to the longitudinal direction. The cable comprises at least a core and a sheath. The core comprises an electrically conducting material and the sheath comprises an electrically insulating material. The sheath envelops at least an electrically insulated portion of the core. This method comprises a stripping step during which a portion of the sheath is removed to obtain a stripped portion of the cable, and a crimping step during which the crimping ears are bent over onto the stripped portion of the cable.

This method further comprises, prior to the crimping step, a precompacting step during which at least a part of the stripped portion of the cable is compacted.

Thus, by virtue of this method, a contact having crimping ears suitable for being crimped for example onto 35 or 50 square millimetre cables can still be used for crimping for example onto 70 square millimetre cables. This method may of course be extended to any cross section of cable. For example, the abovementioned method can be used to crimp contacts onto cables having a cross section of which the magnitude is greater than or equal to 6 square millimetres. In this document, when the magnitude of a cross section of cable is indicated as being equal to X square millimetres, that corresponds to the sum of the cross sections of each of the strands. For example, a 2128-strand cable with each strand having a diameter of 0.21 mm, has an "equivalent" cross section of around 70 square millimetres, even though its actual diameter is 11.1 mm.

This method also potentially comprises one and/or another of the following features each considered independently of one another or in combination with one or more others:
- the compacting step is performed using an apparatus that makes it possible to obtain a single strand cable portion from a multistrand cable; for example, this is an ultrasonic welding apparatus; this ultrasonic compaction technique allows the strands of a cable to be welded together; compaction according to the rules of the art is thus achieved, integrating all of the strands into the compacted portion; all the strands can participate in carrying the current; specifically, on the one hand, there are no strands that escape the crimping portion during the crimping operation and, on the other hand, the cross section of the crimped portion of cable is better utilized for carrying current because the current streamlines penetrate further towards the centre of the cable; the lower resistance to the passing of current from one strand to another makes it possible to reduce heating and therefore also allows higher intensity currents to be carried without excessive heating;
- the contact has crimping ears suitable for being crimped onto a cable of a given cross section and it is crimped onto a cable having a cross section greater than said given cross section; for example, the cable is a multistrand cable at least 11 mm in diameter and the portion of this cable after the precompacting step has a rectangular cross section of 81 square millimetres;
- the cable is a 70 square millimetre cable of round cross section prior to the precompacting step and the crimping portion of the contact has, perpendicular to its longitudinal direction, a pre-crimping developed length of 42 mm.

Also disclosed hereinbelow is an assembly comprising a power contact on a free end of an electric cable. The electric cable comprises at least a core and a sheath. The core comprises an electrically conducting material. The sheath comprises an electrically insulating material. The sheath envelops at least an electrically insulated portion of the core, a portion of the sheath being removed from another portion of the core thus forming a stripped portion of the cable.

In this assembly, the power contact comprises a crimping portion extending essentially parallel to a longitudinal direction. The crimping portion comprises a channel on each side of which there extends at least one crimping ear. The channel and the crimping ears form a U-shape in cross section perpendicular to the longitudinal direction. The crimping ears are bent over onto the stripped portion of the cable. Furthermore, part of the stripped portion of the cable, onto which portion the crimping ears are bent over, is compacted.

This assembly also potentially comprises one and/or another of the following features each considered independently of one another or in combination with one or more others:
- the cable is a multistrand cable and, on a part of the stripped portion, the strands have features of strands that have been compacted by ultrasonic welding;
- the contact is a contact formed by cutting from a sheet of electrically conducting material with a crimping ears developed length less than or substantially equal to 38.5 mm;
- on the stripped and compacted portion of the cable, the crimping ears are bent over, meet and touch one another;
- the non-compacted multistrand electric cable has a cross section greater than or equal to 35 square millimetres; this cross section is for example greater than or equal to 70 square millimetres.

### Brief description of the drawings

Further features, objectives and advantages of the contact mentioned hereinabove will become apparent from reading the detailed description which follows, and by studying the attached drawings, given by way of nonlimiting examples, and in which:
[Fig. 1] is a schematic depiction, in transverse section, of an example of a crimping portion obtained by a method of the prior art, using a 70 square millimetre cable that has not been precompacted and a contact the crimping ears of which correspond to a developed length of 38.5 mm;
[Fig. 2] is a schematic depiction, in perspective, of a blank corresponding to one exemplary embodiment of a female contact;
[Fig. 3] is a schematic depiction, in transverse section, prior to crimping, of the free end of a precompacted multistrand cable placed in the crimping portion of a contact of which the crimping ears correspond to a developed length of 38.5 mm;
[Fig. 4] is a schematic depiction in longitudinal section of the free end of the multistrand cable and the crimping portion of a contact which were depicted in Figure 3;
[Fig. 5] is a schematic depiction, in perspective, of the free end of a multistrand cable after a precompacting step according to the embodiment of the method described hereinbelow; and
[Fig. 6] is a schematic depiction, in transverse section, of an example of an assembly obtained by the method described hereinbelow, using a cable of 70 square millimetres when not precompacted and a contact the crimping ears of which correspond to a developed length of 38.5 mm.

### Detailed description

Of course, because the invention relates essentially to the crimping portion of a power contact, for the sake of conciseness, only an example of a female contact is described hereinbelow as one of many numerous other possible examples of power contacts, whether these be male contacts or female contacts.

The contact 1 described hereinbelow is, for example, used as a power contact for a charging point for an electric vehicle or a rechargeable hybrid vehicle. In other words, it is intended to be electrically connected to an electric cable 100 and mounted in a charging unit (not depicted). However, a contact 1 of this type may be used in applications other than that corresponding to a charging point.

This contact 1 described hereinbelow in connection with Figure 2 is formed by cutting and shaping a blank from sheet metal made of a copper alloy. For example, this sheet metal is 1.4 millimetres thick. The contact 1 is therefore essentially a one-piece contact.

As depicted in Figure 1, the contact 1 comprises a front end 2 and a rear end 3 ("front" and "rear" referring to the direction of connection, the front end 2 corresponding to the end via which the pin of a male contact is introduced into this female contact). This contact 1 thus comprises, from its front end 2 towards its rear end 3, a contact portion 4 and a crimping portion 5. The contact portion 4 is intended to establish an electrical connection with a male contact. The crimping portion 5 is intended to accept the free end of an electric cable 100 and establish electrical connection therewith.

The crimping portion 5 extends in a longitudinal direction L between an end situated towards the contact portion 4 and the rear end 3. The crimping portion 5 comprises two crimping ears 6. Each crimping ear 6 comprises a frontal edge 7 towards the front end 2, a rear edge 8 towards the rear end 3 and a longitudinal edge 9. Each frontal edge 7 or rear edge 8 is essentially perpendicular to the longitudinal direction L. Each longitudinal edge 9 is essentially parallel to the longitudinal direction L.

Once the contact portion 4 and crimping portion 5 have been cut from the electrically conducting sheet material, as depicted in Figure 2, each of the crimping ears 6 extends from a central zone 10. In the example described here, the developed length D (perpendicular to the longitudinal direction L) of the contact 1 at the crimping ears 6 is equal to 38.5 mm.

At the crimping portion 4, the contact 1 has an internal surface 11. This internal surface 11 is intended to come into contact with the cable 100 onto which the crimping portion 5 will be crimped. Striations, ribs, indentations, etc. may be made on the internal surface 11, in the region of the crimping ears 6 and/or of the central zone 10 intended to come into contact with the cable 100.

After the operation of cutting out the blank, an operation of curving the central zone 10 and the crimping ears 6 is then performed, after which the crimping portion 5 has the shape of a channel, symmetrical about a plane P of symmetry parallel to the longitudinal direction L.

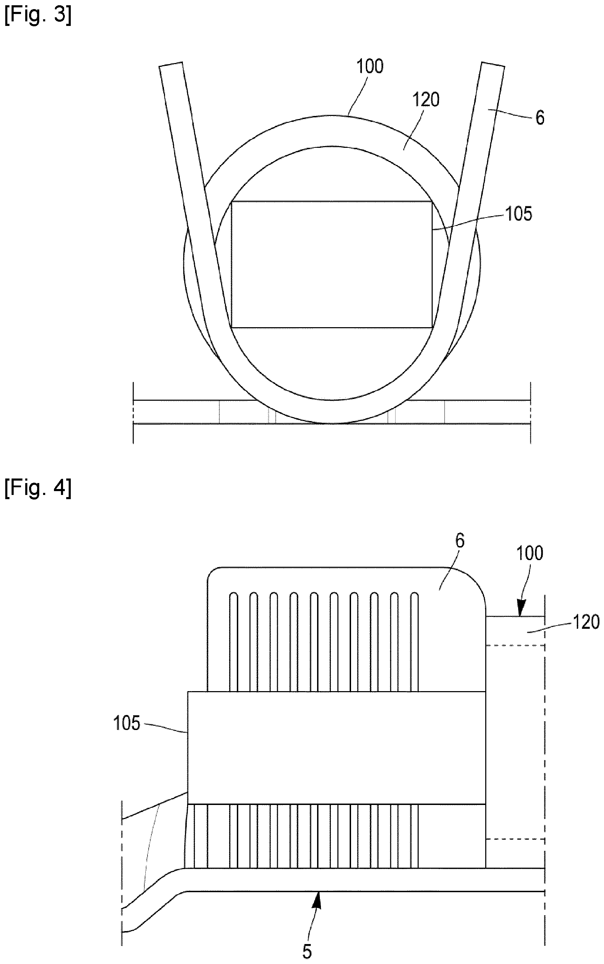

As depicted in Figures 3 and 4, the crimping portion 5 thus, after this operation of curving the crimping ears 6 but before being crimped onto a cable 100 has, in transverse section, a U-shape. Each of the arms of this U therefore corresponds to a crimping ear 6.

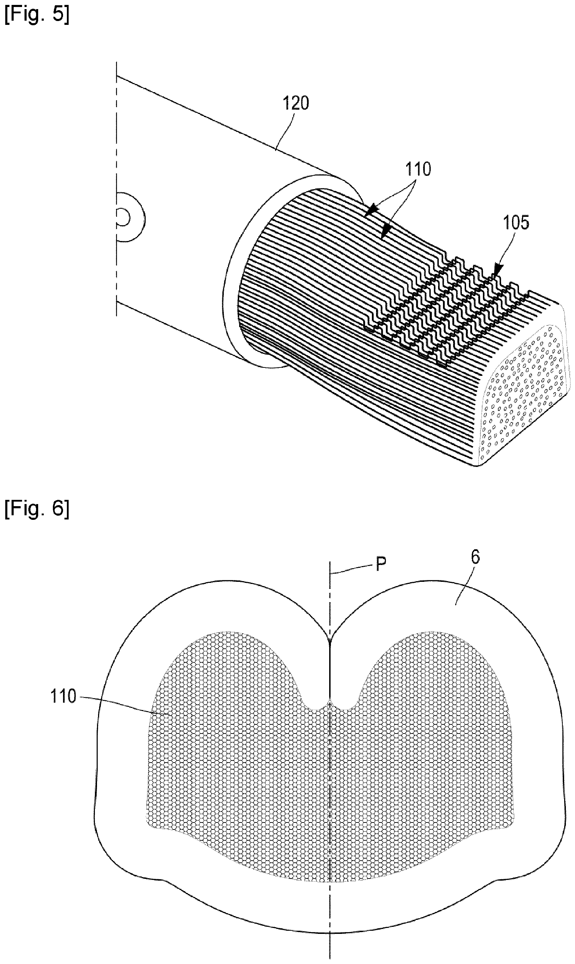

As depicted in Figure 5, the cable 100 is a multistrand cable which is therefore made up of several strands 110. The cable is for example a cable said to have a cross section of 70 square millimetres. Each of its strands 110 is made of a conducting material (for example copper, aluminium or an alloy of one or the other of these metals). The strands 110 may all be made of the one same metal or alloy. Alternatively, different strands 110 may be made of different metals or alloys. The cable 100 is covered with a sheath 120 of insulating material. The cable 100 may potentially comprise a braided screen (which is not the case in the example depicted). The free end of the cable 100 is stripped before being introduced into the crimping portion 5. The end of a cable 100 is stripped over a length greater than or equal to the dimension of the crimping ears 6 parallel to the longitudinal direction L.

The free and stripped end of the cable 100 then undergoes a precompacting operation. This operation is performed for example using an ultrasonic welding apparatus. For example, this apparatus generates an ultrasonic power of 6 kW to compact multistrand copper cables of cross section comprised between 20 and 80 square millimetres or aluminium cables of cross section comprised between 40 and 120 square millimetres. According to another example, this apparatus generates an ultrasonic power of 9 kW to compact multistrand copper cables of cross section comprised between 20 and 120 square millimetres or aluminium cables of cross section comprised between 40 and 160 square millimetres. The pressure applied to the strands that are to be compacted is, for example, 6.5 bar.

At the end of this precompacting operation, the free end 105 of the cable 100 has a rectangular shape measuring 9.9 ± 0.3 mm by 8.2 ± 0.3 mm. This end is inserted into the crimping portion 5 while the crimping ears 6 have not yet been folded over.

Next, the crimping portion 5, with the stripped end of the cable 100 introduced into it undergoes deformation between a suitable die and anvil, in order to bring the longitudinal edge 9 of each crimping ear 6 over towards the inside and towards the bottom of the channel formed by the crimping portion 5. As depicted in Figure 6, during the operation of shaping the crimping ears 6, these are brought against one another essentially symmetrically on each side of a plane of symmetry parallel to the longitudinal direction L. The longitudinal edge 9 penetrates into the strands 110. This operation is advantageously facilitated by providing longitudinal edges 9 that are chamfered.

After this shaping of the crimping ears 6, the crimping portion 5 has a transverse section exhibiting two lobes 12. The greatest width of the crimping zone is for example equal to 12.6 ± 0.2 mm. The greatest height of the crimping zone is for example equal to 9.0 ± 0.2 mm.

In the crushed zone of the crimping portion 5 the compression is relatively uniform. This makes it possible to obtain electrical contact between the strands 110 that is uniform and better across the entire cross section of the cable 100.

Notably, this makes it possible to significantly reduce the internal resistance between the strands 110. For example, the resistance of a connection between a 70 square millimetre cross section multistrand cable that has not been precompacted, with a crimping portion having a developed length of 38.5 mm, is comprised between 20 and 60 microohms, with a mean of around 30 microohms; whereas the resistance of a connection between a multistrand cable with a cross section of 70 square millimetres that has been precompacted according to the method described hereinabove, with a crimping portion having a developed length of 38.5 mm, is comprised between 7 and 12 microohms with a mean at around 10 microohms. It therefore also follows that there is a lesser increase in temperature in the zone thus crimped. For example, with a current of 200 amperes, the temperature stabilizes at around 64.5°C in the former case and at around 35.6°C in the latter. As the resistance has decreased by around 67%, it is possible to increase the current by 50% without exceeding the temperature achieved without precompacting the free end of the cable.

The contact 1 described hereinabove may exhibit numerous variants other than the one described hereinabove by having different dimensions, different materials, different shapes.

## Claims

1. Method for crimping a power contact (1) onto a free end (105) of an electric cable (100), wherein
the power contact (1) comprises a crimping portion (5) extending essentially parallel to a longitudinal direction (L), the crimping portion (5) comprising a channel on each side of which there extends at least one crimping ear (6), the channel and the crimping ears (6) forming a U-shape in cross section perpendicular to the longitudinal direction (L), and
the electric cable (100) comprises at least a core and a sheath (120), the core comprising an electrically conducting material, and the sheath (120) comprising an electrically insulating material and enveloping at least an electrically insulated portion of the core, this method comprising
a stripping step during which a portion of the sheath (120) is removed to obtain a stripped portion of the cable (100),
a precompacting step during which at least part of the stripped portion of the cable (100) is compacted, and
a crimping step during which the crimping ears (6) are bent over onto the stripped and compacted portion of the cable (100),
this method being **characterized in that** the contact (1) is a contact having crimping ears (6) suitable for being crimped onto a cable of a given equivalent cross section when not compacted, and the cable (100) has a non-compacted equivalent cross section greater than said given equivalent cross section.

2. Method according to Claim 1, wherein the contact (1) is formed by being cut out from a sheet of electrically conducting material with a developed length (D) of the crimping ears (6) less than or substantially equal to 38.5 mm and the cable (100) is a cable of at least 11 mm diameter when not compacted and the compacted portion of this cable (100) after the precompacting step has a rectangular cross section of 81 square millimetres.

3. Method according to Claim 1 or 2, wherein the compacting step is performed using an apparatus making it possible to obtain a single-strand portion of cable from a multistrand cable.

4. Method according to Claim 3, wherein the compacting step is performed using an ultrasonic welding apparatus.

5. Assembly comprising a power contact (1) on a free end (105) of an electric cable (100), wherein
the electric cable (100) comprises at least a core and a sheath (120), the core comprising an electrically conducting material, and the sheath comprising an electrically insulating material and enveloping at least an electrically insulated portion of the core, a portion of the sheath being removed over another portion of the core thus forming a stripped portion of the cable (100),
the power contact (1) comprises a crimping portion (5) extending essentially parallel to a longitudinal direction, the crimping portion (5) comprising a channel on each side of which there extends at least one crimping ear (6), the channel and the crimping ears (6) forming a U-shape in cross section perpendicular to the longitudinal direction (L), and the crimping ears (6) being bent over onto the stripped portion of the cable (100), wherein the part of the stripped portion of the cable (100) onto which the crimping ears (6) are bent over is compacted,
**characterized in that** the contact (1) is a contact having crimping ears (6) suitable for being crimped onto a multistrand cable (100) of a given equivalent cross section when not compacted, and the cable (100) has a non-compacted equivalent cross section greater than said given equivalent cross section.

6. Assembly according to Claim 5, wherein the cable (100) is a multistrand cable (100) and, over a part of the stripped portion, the strands (110) are assembled into a single strand.

7. Assembly according to Claim 5 or 8, wherein the cable (100) is a multistrand cable (100) and, over part of the stripped portion, the strands (110) have characteristics of strands compacted by ultrasonic welding.

8. Assembly according to one of Claims 5 to 7, wherein the contact (1) is a contact formed by being cut out of a sheet of electrically conducting material with a developed length (D) of the crimping ears (6) less than or substantially equal to 38.5 mm.

9. Assembly according to one of Claims 5 to 8, wherein, on the stripped portion of the cable (100), the crimping ears (6) are bent over, meet and touch one another.

10. Assembly according to one of Claims 5 to 9, wherein the multistrand electric cable, on a non-compacted portion, has an equivalent cross section greater than or equal to 70 square millimetres.
